# EUROPEAN PATENT APPLICATION

(11) **EP 4 596 063 A1**
(43) Date of publication of application: **06.08.2025**
(21) Application number: 22938601.6
(22) Date of filing: 11.11.2022
(51) Int. Cl.: A63F 13/24, A63F 13/92

(54) **PORTABLE GAME DEVICE**

(71) Applicant: Nintendo Co., Ltd., Kyoto-shi, Kyoto 601-8501 (JP)
(72) Inventor: AMANO, Yasuhiro, Kyoto-shi, Kyoto 601-8501 (JP); MIYAKE, Haruki, Kyoto-shi, Kyoto 601-8501 (JP); SHIROMOTO, Saki, Kyoto-shi, Kyoto 601-8501 (JP); TAOKA, Sai, Kyoto-shi, Kyoto 601-8501 (JP)
(74) Representative: von Tietzen und Hennig, Nikolaus
(86) International application number: PCT/JP2022/042094
(87) International publication number: WO 2023/203804

(57) **Abstract**

The portable game device (1, 1') includes a display (3), a first operation button (4), a second operation button (5), and a housing (2, 2') having a main surface (21, 21'), a back surface (22, 22') and a side surface. The side surface has an upper surface (23, 23') on which the first operation button and the second operation button are arranged. The first operation button has a first exposed part (41) exposed from the housing and a first shaft (45) serving as a rotation center of the first operation button. The first exposed part has, on the right side of the first exposed part, a first inclined part (411) inclined from the right side toward the left side in a direction away the upper surface. The first shaft is arranged in the same position as the first exposed part in a left-right direction, and is accommodated in the housing so as to be rotatable in a direction in which a left end part of the first exposed part sinks when the first exposed part is pressed downward and so as to prevent an entirety of the first exposed part from moving downward. The second operation button is configured in the same way as the first operation button.

## Description

### Technical Field

The present invention relates to a portable game device.

### Background Art

Conventionally, in a portable game device, providing operation buttons on an upper surface of a housing in addition to on a main surface of the housing, where the display is provided, is well known (for example, Japanese Unexamined Patent Publication (Kokai) No. 2021-12652).

### Summary of Invention

### Technical Problem

However, in accordance with the demand for a smaller portable game device, there is a demand for even smaller operation buttons, and there is room for improvement in the configurations of the operation buttons provided on the upper surface of the housing.

In view of the above, an object of the present invention is to provide a portable game device having an improved configuration of the operation buttons provided on the upper surface of the housing.

### Solution to Problem

The summary of the present disclosure is as follows.
(1) A portable game device, comprising: a display, a first operation button and a second operation button to be operated by a user, and a housing having a main surface in which the display is provided, a back surface positioned on an opposite side of the main surface, and a side surface connecting the main surface and the back surface, wherein the side surface has an upper surface positioned upward when viewed by the user in a state in which the portable game device is held by the user such that the user faces the main surface, a lower surface positioned on an opposite side of the upper surface, a left surface positioned left when viewed by the user in the state, and a right surface positioned on an opposite side of the left surface, the first operation button is arranged on the upper surface in an area closer to the left surface than the right surface, and the second operation button is arranged on the upper surface in an area closer to the right surface than the left surface, the first operation button has a first exposed part exposed from the housing, and a first shaft serving as a rotation center of the first operation button, the first exposed part has, on the right surface side of the first exposed part, a first inclined part inclined from the right surface side toward the left surface side in a direction away from the upper surface, the first shaft is provided on the lower surface side of the first inclined part, in the same position as a position where the first inclined part is provided relative to the upper surface in a left-right direction between the left surface and the right surface, and is accommodated in the housing so as to be rotatable in a direction in which an end part on the left surface side of the first exposed part sinks when the first exposed part is pressed toward the lower surface side and so as to prevent an entirety of the first exposed part from moving toward the lower surface side, the second operation button has a second exposed part exposed from the housing, and a second shaft serving as a rotation center of the second operation button, the second exposed part has, on the left surface side of the second exposed part, a second inclined part inclined from the left surface side toward the right surface side in a direction away from the upper surface, and the second shaft is provided on the lower surface side of the second inclined part, in the same position as a position where the second inclined part is provided relative to the upper surface in the left-right direction, and is accommodated in the housing so as to be rotatable in a direction in which an end part on the right surface side of the second exposed part sinks when the second exposed part is pressed toward the lower surface side and so as to prevent an entirety of the second exposed part from moving toward the lower surface side.
   According to the aspect of above (1), the space required for providing the first operation button and the second operation button can be reduced while suppressing a decrease in the operability of the first operation button and the second operation button, whereby a portable game device having an improved configuration of the operation buttons provided on the upper surface of the housing is provided.
(2) The portable game device described in above (1), further comprising a third operation button and a fourth operation button to be operated by a user, wherein the third operation button has a third exposed part exposed from the housing, and the fourth operation button has a fourth exposed part exposed from the housing, and on the upper surface, an end part on the right surface side of the third exposed part is arranged closer to the left surface than the end part on the left surface side of the first exposed part, and on the upper surface, an end part on the left surface side of the fourth exposed part is arranged closer to the right surface than the end part on the right surface side of the second exposed part.
   According to the aspect of above (2), by arranging the third exposed part to the left of the first exposed part of the first operation button, which can only rotate, continuous button operation from the first operation button to the third operation button can be facilitated, and by arranging the fourth exposed part to the right of the second exposed part of the second operation button, which can only rotate, continuous button operation from the second operation button to the fourth operation button can be facilitated.
(3) The portable game device described in above (2), wherein the third operation button is capable of moving linearly so that an entirety of the third exposed part sinks when the third exposed part is pressed toward the lower surface side, and the fourth operation button is capable of moving linearly so that an entirety of the fourth exposed part sinks when the fourth exposed part is pressed toward the lower surface side.
   According to the aspect of above (3), the user can be prevented from confusing the first operation button with the third operation button and confusing the second operation button with the fourth operation button, whereby the user can be prevented from erroneously operating the buttons.
(4) The portable game device described in above (3), wherein the third operation button has a third shaft serving as a rotation center of the third operation button, the third shaft is accommodated in the housing so as to be capable of moving linearly so that the entirety of the third exposed part sinks when the third exposed part is pressed toward the lower surface side, and so as to be rotatable so that an end part on the left surface side of the third exposed part sinks when the third exposed part is pressed toward the lower surface side, and the fourth operation button has a fourth shaft serving as a rotation center of the fourth operation button, the fourth shaft is accommodated in the housing so as to be capable of moving linearly so that the entirety of the fourth exposed part sinks when the fourth exposed part is pressed toward the lower surface side, and so as to be rotatable so that an end part on the right surface side of the fourth exposed part sinks when the fourth exposed part is pressed toward the lower surface side.
   According to the aspect of above (4), each of the third operation button and the fourth operation button can be operated in two types of operation modes, and the operability of the third operation button and the fourth operation button can be further improved.
(5) The portable game device described in above (4), wherein the upper surface has an upper left corner connected to the left surface and having a round shape or a chamfered shape, and an upper right corner connected to the right surface and having a round shape or a chamfered shape, the third exposed part extends along the upper left corner outside the housing, and the fourth exposed part extends along the upper right corner outside the housing.
   According to the aspect of above (5), a force in a direction for rotating the third shaft can be more easily generated when the third exposed part is pressed, thereby further improving the operability of the third operation button, and a force in a direction for rotating the fourth shaft can be more easily generated when the fourth exposed part is pressed, thereby further improving the operability of the fourth operation button.
(6) The portable game device described in any one of above (2) to (5), wherein the first exposed part and the third exposed part are arranged in a range where an index finger of a left hand of a user extends when the left hand is placed on the left surface, and the second exposed part and the fourth exposed part are arranged in a range where an index finger of a right hand of a user extends when the right hand is placed on the right surface.
   According to the aspect of above (6), the first operation button and the third operation button can be operated with one index finger and the second operation button and the fourth operation button can be operated with the other index finger, improving the operability of the portable game device.
(7) The portable game device described in any one of above (2) to (5), wherein a distance from an end part on the right surface side of the first exposed part to an end part on the left surface side of the third exposed part in the left-right direction is 30 mm to 40 mm, and a distance from an end part on the left surface side of the second exposed part to an end part on the right surface side of the fourth exposed part in the left-right direction is 30 mm to 40 mm.
   According to the aspect of above (7), a typical user can operate the first operation button and the third operation button with one index finger and operate the second operation button and the fourth operation button with the other index finger, improving the operation of the portable game device.
(8) The portable game device described in above (6) or (7), wherein in a front-rear direction between the main surface and the back surface, a length of the first exposed part is longer than a length of the third exposed part, and in the front-rear direction, a length of the second exposed part is longer than a length of the fourth exposed part.
   According to the aspect of above (8), a decrease in the operability of the first operation button and the second operation button when the index finger is placed at an angle to the upper surface can be suppressed.
(9) The portable game device described in above (8), wherein in the front-rear direction, a position of an end part on the main surface side of the first exposed part is equivalent to a position of an end part on the main surface side of the third exposed part, and in the front-rear direction, a position of an end part on the main surface side of the second exposed part is equivalent to a position of an end part on the main surface side of the fourth exposed part.
   According to the aspect of above (9), both the first operation button and the third operation button can be operated simultaneously with one index finger, whereby both the second operation button and the fourth operation button can be operated simultaneously with the other index finger.
(10) The portable game device described in any one of above (7) to (9), wherein an interval between the first exposed part and the third exposed part in the left-right direction is 3 mm to 10 mm, and an interval between the second exposed part and the fourth exposed part in the left-right direction is 3 mm to 10 mm.
   According to the aspect of above (10), the first operation button and the third operation button can be operated continuously, while preventing the user from unintentionally pressing the first operation button and the third operation button simultaneously, the second operation button and the fourth operation button can be operated continuously, while preventing the user from unintentionally pressing the second operation button and the fourth operation button simultaneously.
(11) The portable game device described in above (10), wherein a length of the first exposed part in the left-right direction is longer than the interval between the first exposed part and the third exposed part in the left-right direction, and a length of the second exposed part in the left-right direction is longer than the interval between the second exposed part and the fourth exposed part in the left-right direction, and a length of the third exposed part in the left-right direction is longer than the length of the first exposed part in the left-right direction, and a length of the fourth exposed part in the left-right direction is longer than the length of the second exposed part in the left-right direction.

According to the aspect of above (11), the surface areas of the first exposed part, the second exposed part, the third exposed part and the fourth exposed part can be secured within a limited space, whereby the operability of the first operation button, the second operation button, the third operation button and the fourth operation button is improved.

### Brief Description of Drawings

[Fig. 1] FIG. 1 is a front view of a portable game device according to a first embodiment of the present invention.
[Fig. 2] FIG. 2 is a top view of the portable game device according to the first embodiment of the present invention.
[Fig. 3] FIG. 3 is a rear view of the portable game device showing the interior of the housing in a state in which a second housing is removed.
[Fig. 4] FIG. 4 is a front view of a second housing showing an inner surface of the second housing.
[Fig. 5] FIG. 5 is a front view of a first operation button.
[Fig. 6] FIG. 6 is a rear perspective view of the first operation button.
[Fig. 7] FIG. 7 is an enlarged view of the portion of FIG. 3 where the first operation button is provided.
[Fig. 8] FIG. 8 is a front view of a second operation button.
[Fig. 9] FIG. 9 is a front view of a portable game device according to a second embodiment of the present invention.
[Fig. 10] FIG. 10 is a top view of the portable game device according to the second embodiment of the present invention.
[Fig. 11] FIG. 11 is a rear view of the portable game device showing the interior of the housing in a state in which a second housing is removed.
[Fig. 12] FIG. 12 is a front view of the second housing showing an inner surface of the second housing.
[Fig. 13] FIG. 13 is a front view of a third operation button.
[Fig. 14] FIG. 14 is a rear perspective view of the third operation button.
[Fig. 15] FIG. 15 is an enlarged view of the portion of FIG. 11 where the third operation button is provided.
[Fig. 16] FIG. 16 is a front view of a fourth operation button.
[Fig. 17] FIG. 17 is a partially-enlarged front view of the portable game device showing the portion where the first operation button and the third operation button are arranged.

### Description of Embodiments

The embodiments of the present invention will be described with reference to the drawings. Note that in the following description, similar constituent elements have been assigned the same reference signs.

### <First Embodiment>

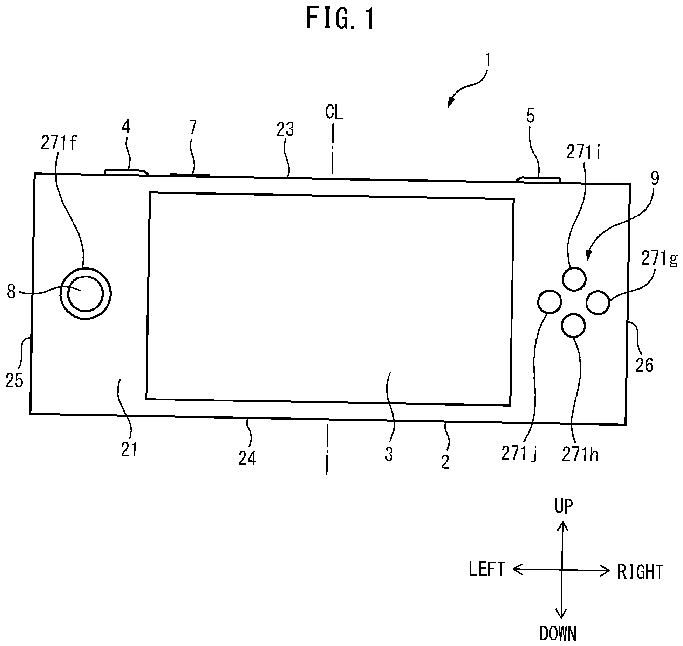

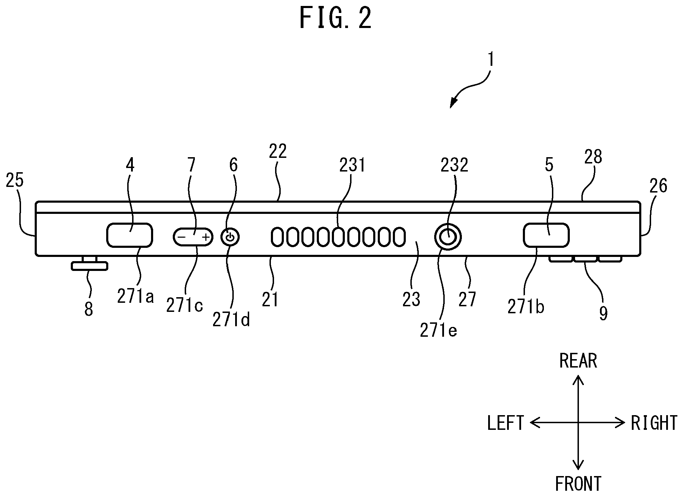

Initially, a first embodiment of the present invention will be described with reference to FIGS. 1 to 8. FIG. 1 is a front view of a portable game device 1 according to the first embodiment of the present invention, and FIG. 2 is a top view of the portable game device 1 according to the first embodiment of the present invention. The portable game device 1 is a game device which can be hand-held, and is powered by, for example, an integrated battery.

The portable game device 1 has a substantially rectangular parallelepiped shape and can be held by a user. The user holds the portable game device 1 in the orientation shown in FIG. 1, and FIG. 1 shows the portable game device 1 on the side facing the user. In the present description, the direction of the portable game device 1 is defined in a state in which the portable game device 1 held by the user is facing the user. In the present embodiment, the length of the portable game device 1 in the left-right direction is longer than the length of the portable game device 1 in the upward-downward direction, and the portable game device 1 has a horizontally elongated shape.

As shown in FIG. 1, the portable game device 1 includes a housing 2, a display 3, and operation members. The housing 2 has a substantially rectangular parallelepiped shape, and forms the outer surface of the portable game device 1. The housing 2 includes a main surface 21 in which the display 3 is provided, a back surface 22 positioned on the opposite side of the main surface 21, and a side surface connecting the main surface 21 and the back surface 22. The main surface 21 of the housing 2 faces the user when the portable game device 1 is operated by the user.

The side surface includes an upper surface 23, a lower surface 24, a left surface 25, and a right surface 26. The upper surface 23 is positioned upward when viewed by the user in a state (hereinafter referred to as the "held state") in which the portable game device is held by the user so that the main surface 21 faces the user, and the lower surface 24 is positioned on the opposite side of the upper surface 23, and is positioned downward when viewed by the user in the held state. The left surface 25 is positioned left when viewed by the user in the held state, the right surface 26 is positioned on the opposite side of the left surface 25, and is positioned right when viewed by the user in the held state. In the present embodiment, an exhaust port 231 for exhausting air from the inner space of the housing 2 to the outside of the housing 2, and an earphone jack 232 are provided in the upper surface 23 of the housing 2.

Note that in the present description, "up" means the direction from the lower surface toward the upper surface, "down" means the direction from the upper surface toward the lower surface, "left" means the direction from the right surface toward the left surface, "right" means the direction from the left surface to the right surface, "front" means the direction from the back surface toward the main surface, and "rear" means the direction from the main surface toward the back surface. Thus, for example, the terms upper side, lower side, right side, left side, front side, and back side can respectively be interpreted to mean the upper surface side, the lower surface side, the right surface side, the left surface side, the main surface side, and the back surface side. Furthermore, the terms upward-downward direction, left-right direction, and front-rear direction can respectively be interpreted to mean the upward-downward direction between the upper surface and the lower surface, the left-right direction between the left surface and the right surface, and the front-rear direction between the main surface and the back surface. Furthermore, the terms upward, downward, forward, and rearward can respectively be interpreted to mean the upper surface side direction, the lower surface side direction, the main surface side direction, and the back surface side direction.

The housing 2 includes a first housing 27 and a second housing 28, and is formed by assembling the first housing 27 and the second housing 28. As shown in FIG. 2, the first housing 27 is arranged on the front side of the portable game device 1, and the second housing 28 is arranged on the rear side of the game device 1. The first housing 27 and the second housing 28 define the inner space of the housing 2 when the first housing 27 and the second housing 28 are assembled. The first housing 27 and the second housing 28 are constructed from resin, metal, etc., and are formed by extrusion molding, die-casting, etc.

The display 3 is provided on the main surface 21 of the housing 2 so that the display surface thereof can be viewed by the user, and displays visual information (character, images, etc.). In the present embodiment, the display 3 is arranged in a center area of the portable game device 1 in the left-right direction. The display 3 is, for example, a liquid crystal display (LCD), an organic EL display, etc. Note that the display 3 may be a touch panel-type display.

In the portable game device 1, the operation members are provided so that at least a part thereof are exposed to the outside and are operated by the user. In the present embodiment, as shown in FIG. 2, the portable game device 1 includes, as operation members which are provided in the upper surface 23 of the housing 2, a first operation button 4, a second operation button 5, a power button 6, and a volume button 7. The first operation button 4 is arranged on the upper surface 23 in an area closer to the left surface 25 than the right surface 26, i.e., in an area on the left side of a left-right center line CL of the portable game device 1. On the other hand, the second operation button 5 is arranged on the upper surface 23 in an area closer to the right surface 26 than the left surface 25, i.e., in an area on the right side of the left-right center line CL of the portable game device 1. The volume button 7, the power button 6, the exhaust port 231, and the earphone jack 232 are arranged between the first operation button 4 and the second operation button 5, and the first operation button 4 is adjacent to the volume button 7. Note that the left-right center line CL of the portable game device 1 means a line which separates the portable game device 1 in two in the left-right direction.

Furthermore, as shown in FIG. 1, the portable game device 1 includes, as operation members provided on the main surface 21 of the housing 2, a stick member 8 and a button group 9. For example, the button group 9 consists of four buttons including an A button, a B button, an X button, and a Y button. The stick member 8 is arranged in an area on the left side of the left-right center line CL of the portable game device 1, and the button group 9 is arranged in an area on the right side of the left-right center line CL of the portable game device 1. The portable game device 1 may further includes, as operation members provided on the main surface 21 of the housing 2, a cross button arranged in an area on the left side of the left-right center line CL, and an analog stick arranged in an area on the right side of the left-right center line CL. The operation members are constructed from resin, metal, etc., and are formed by injection molding, die casting, etc.

Further, as shown in FIGS. 1 and 2, the first housing 27 has holes 271a to 271d through which the operation members provided on the upper surface 23 of the housing 2 pass, a hole 271e for accessing the earphone jack 232, and holes 271f to 271j through which the operation members provided in the main surface 21 of the housing 2 pass. The holes 271a to 271e open in the upper surface 23 of the housing 2, and the holes 271f to 271n open in the main surface 21 of the housing 2.

Note that the configurations and arrangements of the operating members shown in FIGS. 1 and 2 are merely examples, and some of the operation members may be omitted or other operation members may be added. For example, the portable game device 1 may further include, as operation members provided on the main surface 21 of the housing 2, an additional stick member other than the stick member 8, a plus button, a minus button, a capture button for capturing an image displayed on the display 3, a home button for displaying a home menu, etc.

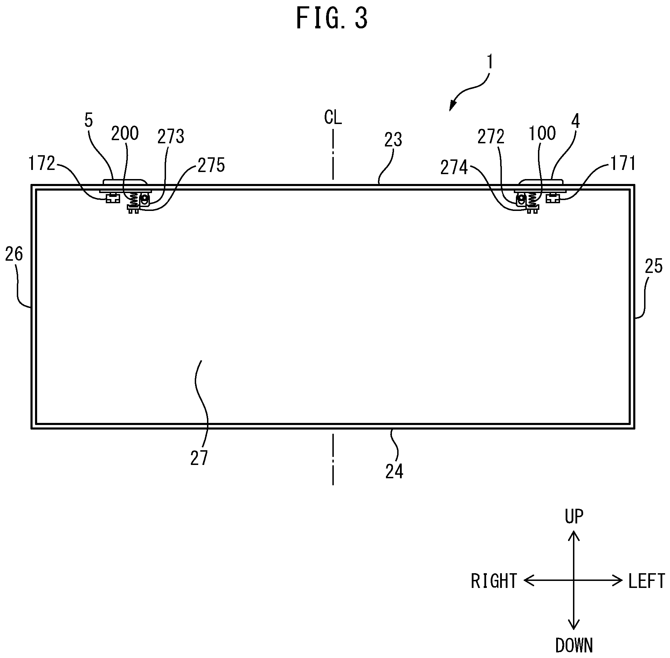

FIG. 3 is a rear view of the portable game device 1 showing the interior of the housing 2 in a state in which the second housing 28 is removed. The housing 2 houses the internal components of the portable game device 1. In the present embodiment, the internal components are attached to the first housing 27, and the second housing 28 covers the internal components attached to the first housing 27. FIG. 3 shows the portable game device 1 in a state in which the second housing 28 is removed. Note that some of the internal components of the portable game device 1 are omitted from FIG. 3.

As shown in FIG. 3, the portable game device 1 includes a first switch 171, a second switch 172, a first spring 100, and a second spring 200 as internal components. The first switch 171 is arranged directly below the first operation button 4 in the internal space of the housing 2, and is pressed by the first operation button 4. The second switch 172 is arranged directly below the second operation button 5 in the internal space of the housing 2, and is pressed by the second operation button 5. The first switch 171 and the second switch 172 have the same shape and are arranged at positions which are symmetrical relative to the left-right center line CL of the portable game device 1. The first switch 171 is arranged to the left of the first spring 100, and the second switch 172 is arranged to the right of the second spring 200. The first switch 171 and the second switch 172 are mounted on, for example, a substrate (specifically, the rear surface of the substrate) accommodated in the housing 2. The first switch 171 and the second switch 172 are, for example, tactile switches. Note that the first switch 171 and the second switch 172 may have shapes which are different from each other.

The first spring 100 is arranged directly below the first operation button 4 in the internal space of the housing 2 and biases the first operation button 4 upward. The second spring 200 is arranged directly below the second operation button 5 in the internal space of the housing 2 and biases the second operation button 5 upward. The first spring 100 and the second spring 200 have the same shape and are arranged at positions which are symmetrical relative to the left-right center line CL of the portable game device 1. The first spring 100 and the second spring 200 are, for example, compression coil springs. The first spring 100 and the second spring 200 may have different shapes. In another embodiment, the first operation button 4 and the second operation button 5 may be biased upward by other elastic bodies or other structures instead of or in addition to springs. For example, if the first switch 171 and the second switch 172 are tactile switches, they may be biased upward by dome parts, and if the first switch 171 and the second switch 172 are rubber switches, they may be biased upward by key rubbers.

As shown in FIG. 3, the first housing 27 has a main surface side first shaft accommodation part 272, a main surface side second shaft accommodation part 273, a first spring support part 274, and a second spring support part 275. The main surface side first shaft accommodation part 272, the main surface side second shaft accommodation part 273, the first spring support part 274, and the second spring support part 275 are provided on the rear surface (back surface) of the first housing 27. The main surface side first shaft accommodation part 272, the main surface side second shaft accommodation part 273, the first spring support part 274, and the second spring support part 275 each protrude from the back surface of the first housing 27 toward the internal space of the housing 2. Furthermore, at least some of the main surface side first shaft accommodation part 272, the main surface side second shaft accommodation part 273, the first spring support part 274, and the second spring support part 275 may be separate from the first housing 27 and be attached to the back surface of the first housing 27 by fasteners (for example, screws), adhesive members (for example, an adhesive, an adhesive tape, etc.), etc.

The main surface side first shaft accommodation part 272 and the main surface side second shaft accommodation part 273 have the same shape and are arranged at positions which are symmetrical relative to the left-right center line CL of the portable game device 1. The functions of the main surface side first shaft accommodation part 272 and the main surface side second shaft accommodation part 273 will be described later.

The first spring support part 274 and the second spring support part 275 have the same shape and are arranged in positions which are symmetrical relative to the left-right center line CL of the portable game device 1. The first spring support part 274 is arranged to the left of the main surface side first shaft accommodation part 272, and the second spring support part 275 is arranged to the right of the main surface side second shaft accommodation part 273. The first spring support part 274 supports the first spring 100, and the second spring support part 275 supports the second spring 200. Note that the first spring support part 274 and the second spring support part 275 may have shapes which are different from each other.

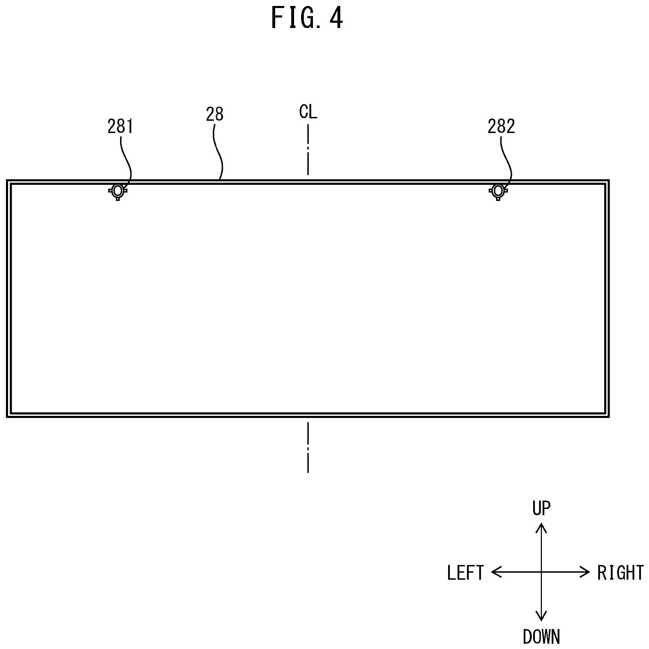

FIG. 4 is a front view of the second housing 28 showing the inner surface of the second housing 28. As shown in FIG. 4, the second housing 28 has a back surface side first shaft accommodation part 281 and a back surface side second shaft accommodation part 282. The back surface side first shaft accommodation part 281 and the back surface side second shaft accommodation part 282 are provided on the front surface (inner surface) of the second housing 28. The back surface side first shaft accommodation part 281 and the back surface side second shaft accommodation part 282 each protrude from the inner surface of the second housing 28 toward the internal space of the housing 2. At least one of the back surface side first shaft accommodation part 281 and the back surface side second shaft accommodation part 282 may be separate from the second housing 28 and be attached to the inner surface of the second housing 28 by a fastener (for example, a screw), an adhesive member (for example, an adhesive, an adhesive tape, etc.), etc.

The back surface side first shaft accommodation part 281 and the back surface side second shaft accommodation part 282 have the same shape and are arranged at positions which are symmetrical relative to the left-right center line CL of the portable game device 1. When the first housing 27 and the second housing 28 are assembled, the back surface side first shaft accommodation part 281 faces the main surface side first shaft accommodation part 272, and the back surface side second shaft accommodation part 282 faces the main surface side second shaft accommodation part 273. The back surface side first shaft accommodation part 281 supports the first operation button 4 together with the main surface side first shaft accommodation part 272, and the back surface side second shaft accommodation part 282 supports the second operation button 5 together with the main surface side second shaft accommodation part 273. The main surface side first shaft accommodation part 272 and the main surface side second shaft accommodation part 273 may have shapes which are different from each other. The back surface side first shaft accommodation part 281 and the back surface side second shaft accommodation part 282 may have shapes which are different from each other.

The configurations of the first operation button 4 and the second operation button 5 will be described in detail below. The first operation button 4 is rotatably supported by the housing 2, and when rotated by the user, presses the first switch 171. The second operation button 5 is rotatably supported by the housing 2, and when rotated by the user, presses the second switch 172.

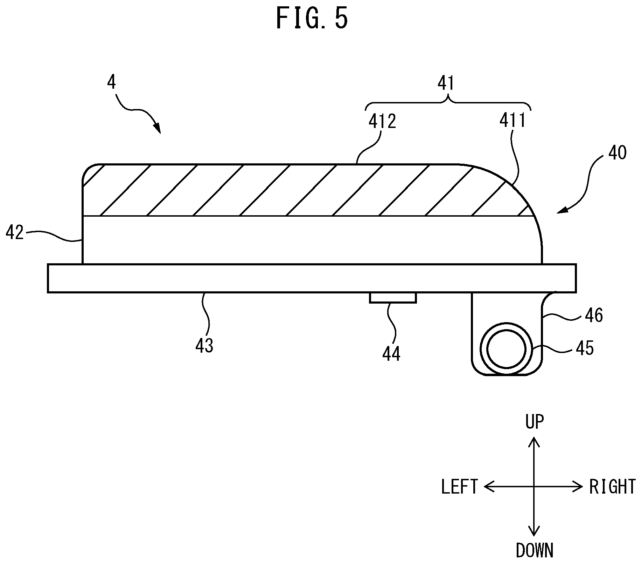

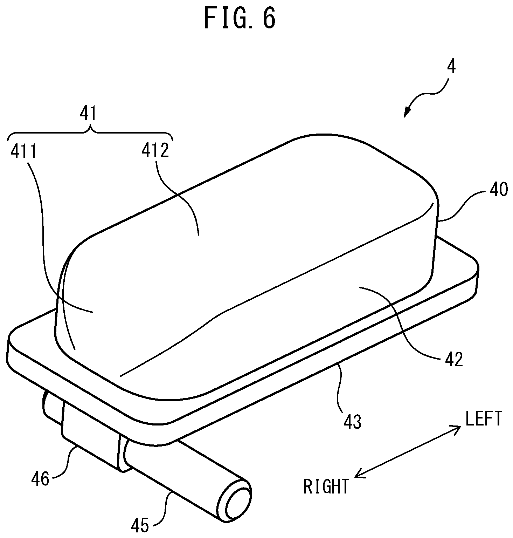

FIG. 5 is a front view of the first operation button 4, and FIG. 6 is a rear perspective view of the first operation button 4. The first operation button 4 has a first keytop part 40, a first base part 43, a first protrusion 44, a first shaft 45, and a first shaft base part 46. The first keytop part 40, the first base part 43, the first protrusion 44, the first shaft 45, and the first shaft base part 46 are integrally molded.

The first keytop part 40 is positioned at the top of the first operation button 4 and is a part positioned outward when the first operation button 4 is provided on the portable game device 1. The first keytop part 40 is contacted by a finger of the user (typically the index finger of the left hand) when the user operates the first operation button 4. The first keytop part 40 is smaller than the hole 271a of the housing 2. The first keytop part 40 passes through the hole 271a and is partially exposed from the housing 2.

The first keytop part 40 is composed of a first exposed part 41 which is exposed from the housing 2, and a first non-exposed part 42 which is not exposed from the housing 2. The first exposed part 41 is positioned outside the upper surface 23, and the first non-exposed part 42 is positioned to the internal space side relative to the upper surface 23. In FIG. 6, the first exposed part 41 is represented by diagonal lines for convenience in order to distinguish between the first exposed part 41 and the first non-exposed part 42.

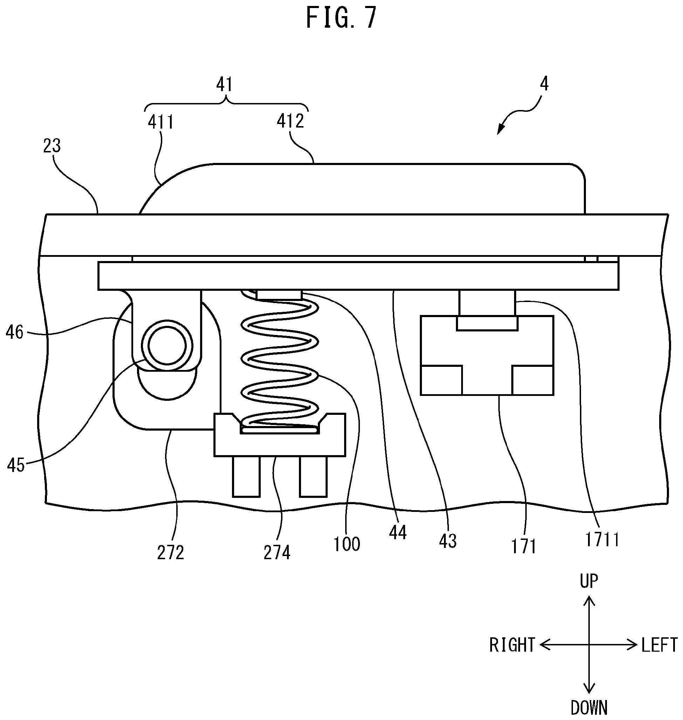

FIG. 7 is an enlarged view of the portion of FIG. 3 where the first operation button 4 is provided. As shown in FIGS. 5 to 7, the first exposed part 41 has a first inclined part 411 and a first flat part 412. The first inclined part 411 is inclined from the right side to the left side at the right side of the first exposed part 41 in a direction away from the upper surface 23. That is, the first inclined part 411 is inclined so as to be away from the upper surface 23 outwardly in the left-right direction. In the present embodiment, the first inclined part 411 is inclined from the right side to the left side at the right end part of the first exposed part 41 in a direction away from the upper surface 23, and has a round shape.

The first flat part 412 has a flat surface and extends parallel to the upper surface 23 of the housing 2 when the first operation button 4 is supported by the housing 2. In the present description, the term "flat" means approximately flat, and the first flat part 412 may have a slightly curved surface or inclination. The first flat part 412 is adjacent to the first inclined part 411 and is smoothly connected to the first inclined part 411. The first exposed part 41 may have another inclined part having an inclination angle different from that of the first inclined part 411 between the first inclined part 411 and the first flat part 412. The first exposed part 41 may have a flat part other than the first flat part 412 or another inclined part having an inclination angle different from that of the first inclined part 411 on the right side of the first inclined part 411. The first inclined part 411 may have another shape such as an inclined surface instead of the round shape.

The first base part 43 is positioned below the first keytop part 40, and the first keytop part 40 protrudes outward from the upper surface of the first base part 43. The first base part 43 is larger than the hole 271a of the housing 2 and is arranged in the internal space of the housing 2. The first base part 43 has a flat plate shape and is biased by the first spring 100 so that the upper surface thereof abuts against the inner surface of the housing 2. As a result, the first operation button 4 can be prevented from falling into the internal space of the housing 2 and becoming unable to return to its original position when the first operation button 4 is pressed downward.

The first protrusion 44 has a cylindrical shape and protrudes downward from the lower surface of the first base part 43. The first protrusion 44 faces the first spring support part 274 in the internal space of the housing 2. As shown in FIG. 7, one end part (lower end part) of the first spring 100 is accommodated in the recess of the first spring support part 274, and the other end part (upper end part) of the first spring 100 surrounds the first protrusion 44 and abuts against the lower surface of the first base part 43. That is, the first protrusion 44 is inserted into the annular end part of the first spring 100. The first spring support part 274 of the housing 2 and the first protrusion 44 of the first operation button 4 restrict the movement of the first spring 100 in the left-right direction while allowing the first spring 100 to expand and contract. As a result, position deviation of the first spring 100 can be prevented.

The first shaft base part 46 protrudes downward from the lower surface of the first base part 43. The first shaft 45 protrudes forward from the front surface of the first shaft base part 46 and protrudes rearward from the rear surface of the first shaft base part 46. That is, the first shaft 45 extends from the first shaft base part 46 in the front-rear direction (the direction perpendicular to the left-right direction and the upward-downward direction). The first shaft 45 is coupled to the first base part 43 and the first keytop part 40 via the first shaft base part 46. The first shaft 45 has a cylindrical shape and serves as the rotation center of the first operation button 4. That is, the first operation button 4 rotates about the first shaft 45 relative to the housing 2.

The first shaft 45 is positioned at the bottom of the first operation button 4, and is arranged in the internal space of the housing 2. The first shaft 45 is positioned in the left-right direction between the boundary between the first inclined part 411 and the first flat part 412, and the right end part of the first exposed part 41. One end part (front end part) of the first shaft 45 is accommodated in the main surface side first shaft accommodation part 272 of the first housing 27, and the other end part (rear end part) of the first shaft 45 is accommodated in the back surface side first shaft accommodation part 281 of the second housing 28. Specifically, the main surface side first shaft accommodation part 272 has an accommodation hole extending in the upward-downward direction, in which the front end part of the first shaft 45 is accommodated, and the back surface side first shaft accommodation part 281 has an accommodation hole extending in the upward-downward direction, in which the rear end part of the first shaft 45 is accommodated.

When the first operation button 4 is attached to the housing 2, first, the front end part of the first shaft 45 is accommodated in the main surface side first shaft accommodation part 272, and the first shaft 45 moves upward within the accommodation hole of the main surface side first shaft accommodation part 272 to expose the first exposed part 41 from the housing 2 through the hole 271a. When the first base part 43 is biased by the first spring 100 in a state in which the first exposed part 41 is exposed from the housing 2, the state of the first operation button 4 is maintained. Next, when the second housing 28 is fastened to the first housing 27, the rear end part of the first shaft 45 is accommodated in the back surface side first shaft accommodation part 281. As a result, the main surface side first shaft accommodation part 272 and the back surface side first shaft accommodation part 281 restrict the movement of the first shaft 45 in the left-right direction, and the back surface side first shaft accommodation part 281 restricts the downward movement of the first shaft 45. Furthermore, the upward movement of the first shaft 45 is restricted by the abutment of the first base part 43 with the housing 2, and the main surface side first shaft accommodation part 272 and the back surface side first shaft accommodation part 281 allow the rotation of the first shaft 45. Thus, the first shaft 45 has one degree of freedom for rotation only. Note that the first operation button 4 may have a shaft accommodation part, and the housing 2 may have a first shaft which serves as the rotation center of the first operation button 4.

As shown in FIG. 7, the first shaft 45 extends in the front-rear direction, and is arranged to the right of the first spring 100 and the first switch 171 in the internal space of the housing 2. The first switch 171 has a protrusion 1711 extending toward the first base part 43 of the first operation button 4. The first shaft 45 is accommodated in the housing 2 so as to be capable of rotating in a direction in which the first shaft 45 rotates clockwise when viewed from the back surface of the portable game device 1 shown in FIG. 7, i.e., in a direction in which the left end part of the first exposed part 41 sinks when the first exposed part 41 is pressed downward.

When the first shaft 45 rotates in the direction described above, the first spring 100 is compressed by the first base part 43, and the first base part 43 presses the protrusion 1711 of the first switch 171. Note that instead of the first switch 171 having the protrusion 1711, the first operation button 4 may have a protrusion for pressing the first switch 171.

In order to effectively generate a force for rotating the first shaft 45, it is desirable that the first exposed part 41 is pressed at a position distant from the first shaft 45. Thus, in order to promote the rotation of the first shaft 45 in the direction described above, arranging the first shaft 45 to the right of the first exposed part 41 has been considered. However, in this case, the length of the first operation button 4 in the left-right direction becomes longer, whereby the space for providing the first operation button 4 becomes larger.

On the other hand, in the present embodiment, the first shaft 45 is provided below the first inclined part 411 of the first exposed part 41, in the same position as the position where the first inclined part 411 is provided relative to the upper surface 23 in the left-right direction. That is, the first shaft 45 is arranged on the inside of both ends of the first exposed part 41. As a result, the space required to provide the first operation button 4 can be reduced as compared to the case in which the first shaft 45 is arranged on the outside of both ends of the first exposed part 41.

However, if the first shaft 45 is arranged on the inside of both ends of the first exposed part 41, the first exposed part 41 may be pressed directly above the first shaft 45. In the case in which the upper surface of the first exposed part 41 is flat, when the first exposed part 41 is pressed directly above the first shaft 45, a force for rotating the first operation button 4 is not generated or is difficult to generate. Conversely, in the present embodiment, since the first operation button 4 is formed so that the position of the first shaft 45 and the position of the first inclined part 411 in the left-right direction are the same, when the user presses the first inclined part 411 directly above the first shaft 45 vertically downward, a force in a direction for rotating the first operation button 4 can easily be generated. Thus, according to the present embodiment, the space required for providing the first operation button 4 can be reduced while suppressing a decrease in the operability of the first operation button 4, whereby a portable game device 1 having an improved configuration of the operation buttons provided on the upper surface 23 of the housing 2 is provided.

Furthermore, in the present embodiment, the housing 2 restrains movement other than rotation of the first shaft 45 via the main surface side first shaft accommodation part 272 and the back surface side first shaft accommodation part 281. That is, the first shaft 45 is accommodated in the housing 2 so as not to move downward when the first exposed part 41 is pressed downward. In other words, the first shaft 45 is accommodated in the housing 2 so as to prevent an entirety of the first exposed part 41 from moving downward when the first exposed part 41 is pressed downward. Thus, no space is required for the first shaft 45 to move in the upward-downward direction, and the space required for providing the first operation button 4 can be further reduced.

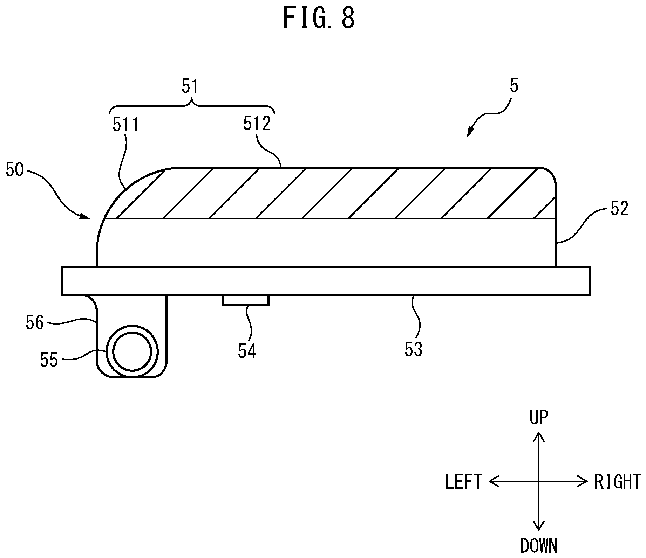

FIG. 8 is a front view of the second operation button 5. As shown in FIG. 3, the first operation button 4 and the second operation button 5 are arranged at positions which are symmetrical relative to the left-right center line CL of the portable game device 1, and have shapes which are symmetrical relative to the left-right center line CL. That is, the second operation button 5 includes a second keytop part 50, a second base part 53, a second protrusion 54, a second shaft 55, and a second shaft base part 56, in the same manner as the first operation button 4. The second keytop part 50, the second base part 53, the second protrusion 54, the second shaft 55, and the second shaft base part 56 are integrally formed. Furthermore, the second keytop part 50 is composed of a second exposed part 51 and a second non-exposed part 52, in the same manner as the first keytop part 40. In FIG. 8, the second exposed part 51 is represented by diagonal lines for convenience in order to distinguish between the second exposed part 51 and the second non-exposed part 52.

The second operation button 5 is supported by the housing 2 in the same manner as the first operation button 4, and has the same characteristics as the first operation button 4. For example, the second exposed part 51 has a second inclined part 511 which is inclined from the left side to the right side on the left side of the second exposed part 51 in a direction away from the upper surface 23, and a second flat part 512 adjacent to the second inclined part 511. In the present embodiment, the second inclined part 511 is inclined from the left side to the right side on the left end part of the second exposed part 51 in a direction away from the upper surface 23. Furthermore, the second shaft 55 is provided below the second inclined part 511 of the second exposed part 51, in the same position as the position where the second inclined part 511 is provided relative to the upper surface 23 in the left-right direction. The second shaft 55 is accommodated in the housing 2 so as not to move downward when the second exposed part 51 is pressed downward. In other words, the second shaft 55 is accommodated in the housing 2 so that the entirety of second exposed part 51 does not move downward when the second exposed part 51 is pressed downward. Due to these characteristics, the second operation button 5 has the same effects as the first operation button 4.

Note that the configurations related to the second operation button 5 (for example, the configurations of the second operation button 5, the main surface side second shaft accommodation part 273, the second spring support part 275, the back surface side second shaft accommodation part 282, the second spring 200, the second switch 172, etc.) can be modified in the same manner as the configurations related to the first operation button 4 (for example, the configurations of the first operation button 4, the main surface side first shaft accommodation part 272, the first spring support part 274, the back surface side first shaft accommodation part 281, the first spring 100, the first switch 171, etc.).

### <Second Embodiment>

The portable game device according to a second embodiment is basically identical to the portable game device according to the first embodiment, except for the points described below. Thus, the second embodiment of the present invention will be described below, focusing on the differences from the first embodiment.

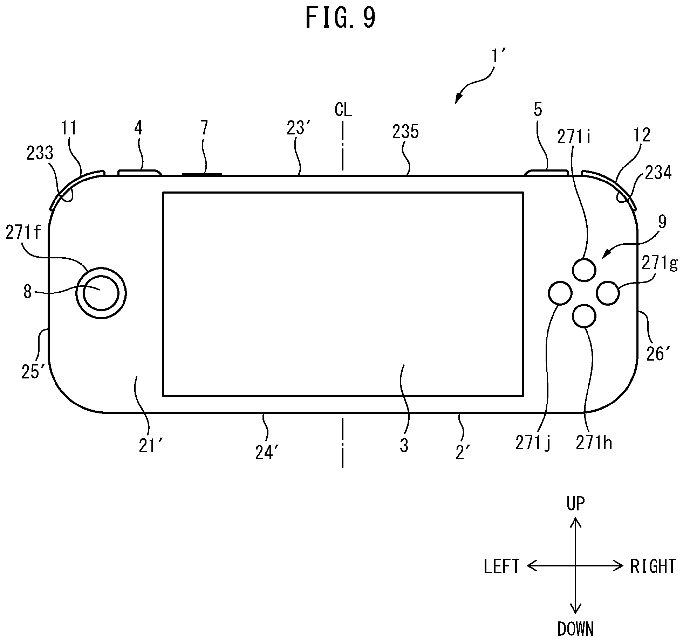

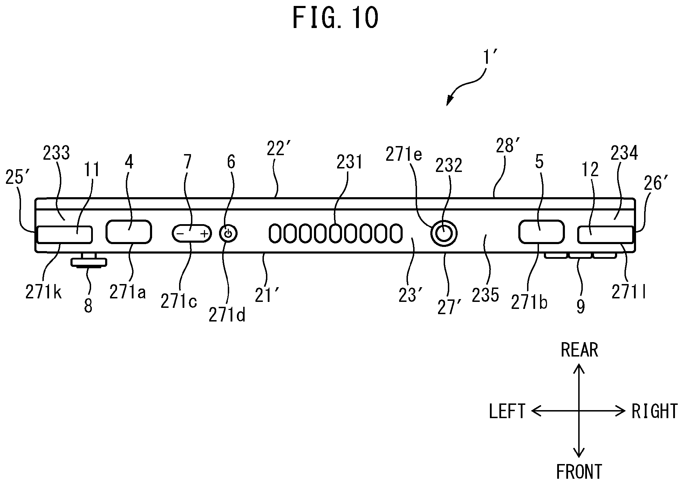

FIG. 9 is a front view of a portable game device 1' according to the second embodiment of the present invention, and FIG. 10 is a top view of the portable game device 1' according to the second embodiment of the present invention. In the same manner as in the first embodiment, a housing 2' of the portable game device 1' has a main surface 21', a back surface 22', and a side surface, and the side surface has an upper surface 23', a lower surface 24', a left surface 25', and a right surface 26'. The housing 2' includes a first housing 27' and a second housing 28', and is formed by assembling the first housing 27' and the second housing 28'.

In the second embodiment, the upper surface 23' of the housing 2' has an upper left corner 233, an upper right corner 234, and a horizontal part 235 between the upper left corner 233 and the upper right corner 234. The upper left corner 233 has a round shape and is connected to the left surface 25'. The upper right corner 234 has a round shape and is connected to the right surface 26'. The horizontal part 235 is a flat surface and is smoothly connected to the upper left corner 233 and the upper right corner 234. Note that the upper left corner 233 and the upper right corner 234 may each have a chamfered shape.

In the second embodiment, the portable game device 1' further includes a third operation button 11 and a fourth operation button 12 as operation members provided on the upper surface 23' of the housing 2'. The third operation button 11 is arranged to the left of the first operation button 4 on the upper surface 23' of the housing 2'. In the present embodiment, the first operation button 4 is arranged on the horizontal part 235 of the upper surface 23', and the third operation button 11 is arranged on the upper left corner 233 of the upper surface 23'. On the other hand, the fourth operation button 12 is arranged to the right of the second operation button 5 on the upper surface 23' of the housing 2'. In the present embodiment, the second operation button 5 is arranged on the horizontal part 235 of the upper surface 23', and the fourth operation button 12 is arranged on the upper right corner 234 of the upper surface 23'. By arranging the first operation button 4, the second operation button 5, the third operation button 11, and the fourth operation button 12 in the left-right direction on the upper surface of the housing 2' in this manner, an increase in the thickness of the portable game device 1' can be prevented. Furthermore, since the first operation button 4, the second operation button 5, the third operation button 11, and the fourth operation button 12 do not protrude from the housing 2' in the front-rear direction (thickness direction), the back surface of the portable game device 1' can be made flat.

Furthermore, in the second embodiment, as shown in FIG. 10, the first housing 27' has, in addition to the holes 271a to 271j, a hole 271k through which the third operation button 11 passes and a hole 271l through which the fourth operation button 12 passes. The hole 271k opens at the upper left corner 233 of the housing 2', and the hole 2711 opens at the upper right corner 234 of the housing 2'.

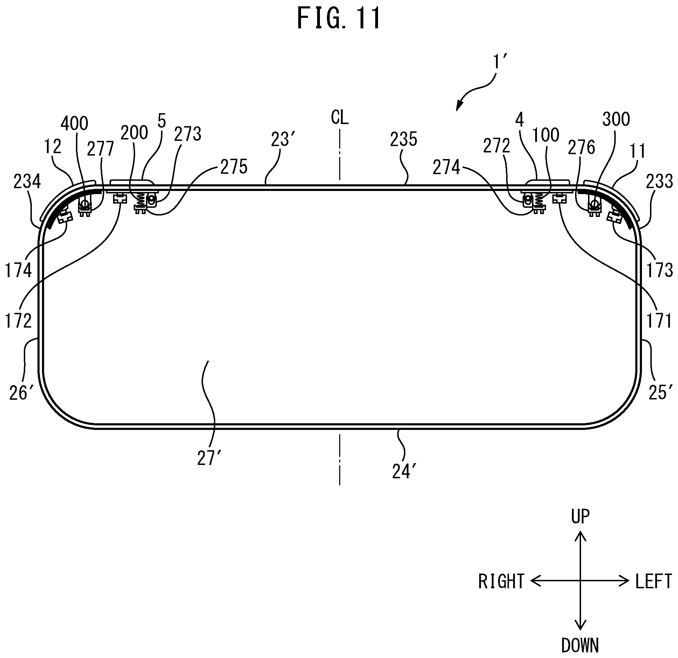

FIG. 11 is a rear view of the portable game device 1' showing the interior of the housing 2' in a state in which the second housing 28' is removed. FIG. 11 shows the portable game device 1' in a state in which the second housing 28' is removed. Note that some of the internal components of the portable game device 1' are omitted in FIG. 11.

As shown in FIG. 11, the portable game device 1' includes a third switch 173, a fourth switch 174, a third spring 300, and a fourth spring 400, in addition to a first switch 171, a second switch 172, a first spring 100, and a second spring 200, as internal components. The third switch 173 is arranged directly below the third operation button 11 in the internal space of the housing 2' and is pressed by the third operation button 11. The fourth switch 174 is arranged directly below the fourth operation button 12 in the internal space of the housing 2' and is pressed by the fourth operation button 12. The third switch 173 and the fourth switch 174 have the same shape and are arranged at positions which are symmetrical relative to the left-right center line CL of the portable game device 1'. In the present embodiment, the third switch 173 and the fourth switch 174 have the same shape as the first switch 171 and the second switch 172. The third switch 173 is arranged to the left of the third spring 300, and the fourth switch 174 is arranged to the right of the fourth spring 400. The third switch 173 and the fourth switch 174 are mounted on, for example, a substrate (specifically, the rear surface of the substrate) accommodated in the housing 2'. The third switch 173 and the fourth switch 174 are, for example, tactile switches. Note that the third switch 173 and the fourth switch 174 may have shapes which are different from each other.

The third spring 300 is arranged directly below the third operation button 11 in the internal space of the housing 2' and biases the third operation button 11 upward. The fourth spring 400 is arranged directly below the fourth operation button 12 in the internal space of the housing 2' and biases the fourth operation button 12 upward. The third spring 300 and the fourth spring 400 have the same shape and are arranged at positions which are symmetrical relative to the left-right center line CL of the portable game device 1. The third spring 300 and the fourth spring 400 are, for example, compression coil springs. The third spring 300 and the fourth spring 400 may have different shapes. In another embodiment, the third operation button 11 and the fourth operation button 12 may be biased upward by other elastic bodies or other structures instead of or in addition to springs. For example, if the third switch 173 and the fourth switch 174 are tactile switches, they may be biased upward by dome parts, and if the third switch 173 and the fourth switch 174 are rubber switches, they may be biased upward by key rubbers.

As shown in FIG. 11, the first housing 27' further has a main surface side third shaft accommodation part 276 and a main surface side fourth shaft accommodation part 277. The main surface side third shaft accommodation part 276 and the main surface side fourth shaft accommodation part 277 are provided on the rear surface (back surface) of the first housing 27'. The main surface side third shaft accommodation part 276 and the main surface side fourth shaft accommodation part 277 each protrude from the back surface of the first housing 27' toward the internal space of the housing 2'. At least one of the main surface side third shaft accommodation part 276 and the main surface side fourth shaft accommodation part 277 may be separate from the first housing 27' and be attached to the back surface of the first housing 27' by a fastener (for example, a screw), an adhesive member (for example, an adhesive, an adhesive tape, etc.), etc.

The main surface side third shaft accommodation part 276 and the main surface side fourth shaft accommodation part 277 have the same shape and are arranged at positions which are symmetrical relative to the left-right center line CL of the portable game device 1'. The functions of the main surface side third shaft accommodation part 276 and the main surface side fourth shaft accommodation part 277 will be described later.

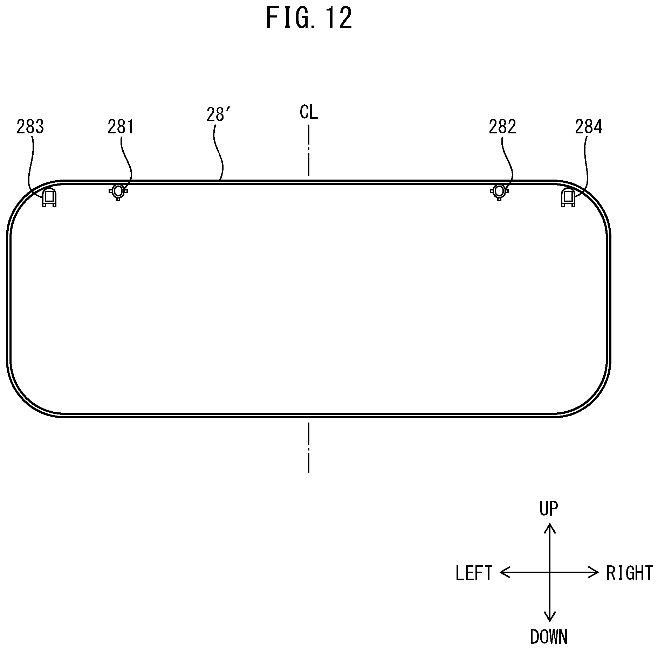

FIG. 12 is a front view of the second housing 28' showing the inner surface of the second housing 28'. As shown in FIG. 12, the second housing 28' further has a back surface side third shaft accommodation part 283 and a back surface side fourth shaft accommodation part 284. The back surface side third shaft accommodation part 283 and the back surface side fourth shaft accommodation part 284 are provided on the surface (inner surface) on the main surface 21' side of the second housing 28'. The back surface side third shaft accommodation part 283 and the back surface side fourth shaft accommodation part 284 each protrude from the inner surface of the second housing 28' toward the internal space of the housing 2'. At least one of the back surface side third shaft accommodation part 283 and the back surface side fourth shaft accommodation part 284 may be separate from the second housing 28' and be attached to the inner surface of the second housing 28' by a fastener (for example, a screw), an adhesive member (for example, an adhesive, an adhesive tape, etc.), etc.

The back surface side third shaft accommodation part 283 and the back surface side fourth shaft accommodation part 284 have the same shape and are arranged at positions which are symmetrical relative to the left-right center line CL of the portable game device 1'. When the first housing 27' and the second housing 28' are assembled, the back surface side third shaft accommodation part 283 faces the main surface side third shaft accommodation part 276, and the back surface side fourth shaft accommodation part 284 faces the main surface side fourth shaft accommodation part 277. The back surface side third shaft accommodation part 283 supports the third operation button 11 together with the main surface side third shaft accommodation part 276, and the back surface side fourth shaft accommodation part 284 supports the fourth operation button 12 together with the main surface side fourth shaft accommodation part 277. The main surface side third shaft accommodation part 276 and the main surface side fourth shaft accommodation part 277 may have shapes which are different from each other. Furthermore, the back surface side third shaft accommodation part 283 and the back surface side fourth shaft accommodation part 284 may have shapes which are different from each other.

The configurations of the third operation button 11 and the fourth operation button 12 will be described in detail below. The third operation button 11 is supported in the housing 2' so as to be linearly and rotatably movable, and presses the third switch 173 when linearly or rotatably operated by the user. The fourth operation button 12 is supported in the housing 2' so as to be linearly and rotatably movable, and presses the fourth switch 174 when linearly or rotatably operated by the user.

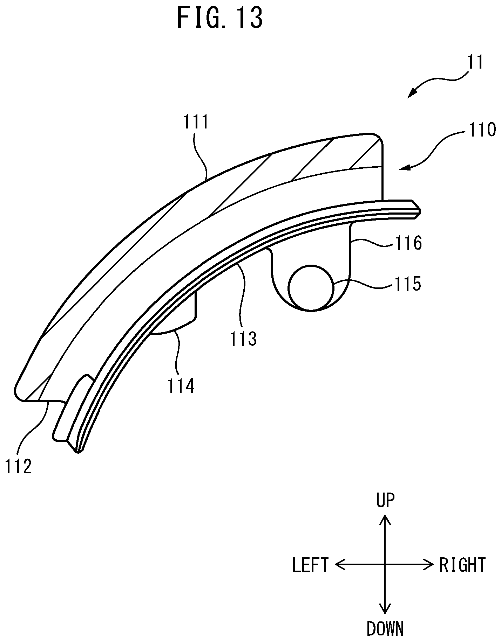

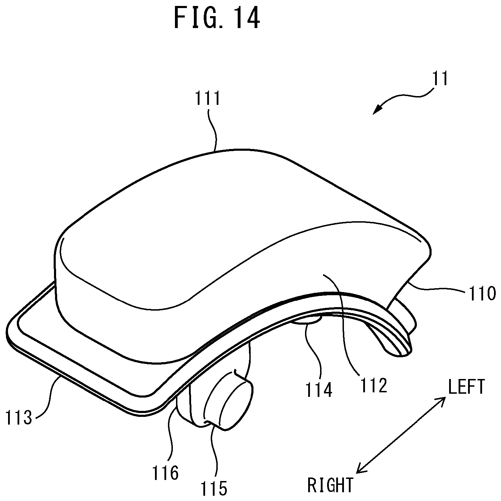

FIG. 13 is a front view of the third operation button 11, and FIG. 14 is a rear perspective view of the third operation button 11. The third operation button 11 has a third keytop part 110, a third base part 113, a third protrusion 114, a third shaft 115, and a third shaft base part 116. The third keytop part 110, the third base part 113, the third protrusion 114, the third shaft 115, and the third shaft base part 116 are integrally molded.

The third keytop part 110 is a part which is positioned outward when the third operation button 11 is provided on the portable game device 1'. The third keytop part 110 is contacted by a finger of the user (typically the index finger of the left hand) when the user operates the third operation button 11. The third keytop part 110 is smaller than the hole 271k of the housing 2'. The third keytop part 110 passes through the hole 271k and is partially exposed from the housing 2'.

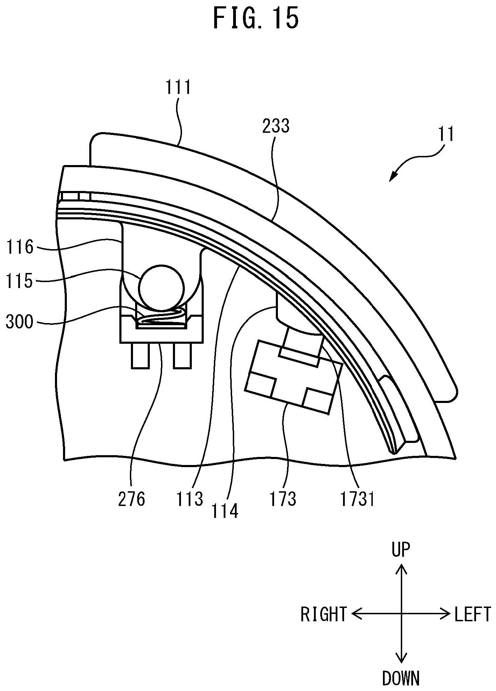

The third keytop part 110 is composed of a third exposed part 111 which is exposed from the housing 2', and a third non-exposed part 112 which is not exposed from the housing 2. The third exposed part 111 is positioned outside the upper surface 23', and the third non-exposed part 112 is positioned to the internal space side relative to the upper surface 23'. In FIG. 13, the third exposed part 111 is represented by diagonal lines for convenience in order to distinguish between the third exposed part 111 and the third non-exposed part 112. FIG. 15 is an enlarged view of the portion of FIG. 11 where the third operation button 11 is provided. As shown in FIG. 15, the third exposed part 111 extends along an upper left corner 233 of the housing 2' outside the housing 2'.

As is clear from FIG. 9, the right end part of the third exposed part 111 of the third operation button 11 is arranged to the left of the left end part of the first exposed part 41 of the first operation button 4 on the upper surface 23'. When the first operation button 4 is operated by the user, the first operation button 4 rotates so that the left end part of the first exposed part 41 moves downward. In such a rotational operation, the fingers of the left hand of the user tend to move to the left side as compared to an operation in which the first operation button 4 is pressed vertically downward. Thus, by arranging the third exposed part 111 to the left of the first exposed part 41 of the first operation button 4, which can only rotate, continuous button operation from the first operation button 4 to the third operation button 11 can be facilitated.

The third base part 113 is positioned below the third keytop part 110, and the third keytop part 110 protrudes outward from an upper surface of the third base part 113. The third base part 113 is larger than the hole 271k of the housing 2' and is arranged in the internal space of the housing 2'. The third base part 113 has a shape which conforms to the upper left corner 233 of the housing 2', and the upper surface thereof abuts against the inner surface of the housing 2' due to the biasing force of the third spring 300. As a result, the third operation button 11 can be prevented from falling into the internal space of the housing 2' and becoming unable to return to its original position when the third operation button 11 is pressed downward.

The third protrusion 114 has a substantially cylindrical shape and protrudes downward from the lower surface of the third base part 113. The third protrusion 114 faces the third switch 173 in the internal space of the housing 2'. As shown in FIG. 15, the third switch 173 has a protrusion 1731 extending toward the third base part 113 of the third operation button 11. The third protrusion 114 presses the protrusion 1731 of the third switch 173 when the third operation button 11 is operated. Note that the third switch 173 may have a shape which is different from that of the first switch 171, and the third protrusion 114 may be omitted as long as the protrusion 1731 of the third switch 173 is formed so as to be pressed by the third base part 113, etc.

The third shaft base part 116 protrudes downward from the lower surface of the third base part 113. The third shaft 115 protrudes forward from the front surface of the third shaft base part 116 and protrudes rearward from the rear surface of the third shaft base part 116. That is, the third shaft 115 extends in the front-rear direction from the third shaft base part 116. The third shaft 115 is connected to the third base part 113 and the third keytop part 110 via the third shaft base part 116. The third shaft 115 has a cylindrical shape and serves as the rotation center of the third operation button 11. That is, the third operation button 11 rotates about the third shaft 115 relative to the housing 2'.

The third shaft 115 is arranged in the internal space of the housing 2'. The third shaft 115 extends in the front-rear direction and is arranged to the right of the third switch 173 in the internal space of the housing 2'. As shown in FIG. 15, one end part (lower end part) of the third spring 300 is accommodated in a recess of the main surface side third shaft accommodation part 276, and the other end part (upper end part) of the third spring 300 abuts against the third shaft 115. That is, the third shaft 115 is supported by the housing 2' via the third spring 300. The main surface side third shaft accommodation part 276 restricts movement of the third spring 300 in the left-right direction while allowing the third spring 300 to expand and contract. As a result, position deviation of the third spring 300 can be prevented.

Further, one end part (front end part) of the third shaft 115 is accommodated in the main surface side third shaft accommodation part 276 of the first housing 27', and the other end part (rear end part) of the third shaft 115 is accommodated in the back surface side third shaft accommodation part 283 of the second housing 28'. Specifically, the main surface side third shaft accommodation part 276 has an accommodation hole extending in the upward-downward direction, in which the front end part of the third shaft 115 is accommodated, and the back surface side third shaft accommodation part 283 has an accommodation hole extending in the upward-downward direction, in which the rear end part of the third shaft 115 is accommodated.

When the third operation button 11 is attached to the housing 2', first, the front end part of the third shaft 115 is accommodated in the main surface side third shaft accommodation part 276, and the third shaft 115 moves upward within the accommodation hole of the main surface side third shaft accommodation part 276 to expose the third exposed part 111 from the housing 2' through the hole 271k. When the third shaft 115 is biased by the third spring 300 in a state in which the third exposed part 111 is exposed from the housing 2', the state of the third operation button 11 is maintained. Next, when the second housing 28' is fastened to the first housing 27', the rear end part of the third shaft 115 is accommodated in the back surface side third shaft accommodation part 283. As a result, the main surface side third shaft accommodation part 276 and the back surface side third shaft accommodation part 283 restrict the movement of the third shaft 115 in the left-right direction while allowing the third shaft 115 to move linearly (in the upward-downward direction) and rotate. Thus, the third shaft 115 has two degrees of freedom for linear movement and rotation. Note that the third operation button 11 may have a shaft accommodation part, and the housing 2' may have a third shaft which serves as a rotation center of the third operation button 11.

When a force for moving the third shaft 115 downward against the biasing force of the third spring 300 is applied to the third operation button 11, for example, when the third exposed part 111 is pressed vertically downward near directly above the third shaft 115, the third shaft 115 moves downward within the accommodation holes of the main surface side third shaft accommodation part 276 and the back surface side third shaft accommodation part 283. On the other hand, when such a force is released, the third shaft 115 moves upward within the accommodation holes of the main surface side third shaft accommodation part 276 and the back surface side third shaft accommodation part 283. Thus, the third shaft 115 is accommodated in the housing 2' so that the entirety of the third exposed part 111 sinks when the third exposed part 111 is pressed downward. That is, the third operation button 11 can be linearly moved so that the entirety of the third exposed part 111 sinks when the third exposed part 111 is pressed downward, and the third switch 173 is pressed by the linear operation by the user. In this case, a different sense of operation is created between the first operation button 4 to which the linear operation is not applied and the third operation button 11 to which the linear operation is applied. Thus, the user can be prevented from confusing the first operation button 4 with the third operation button 11, whereby the user can be prevented from erroneously operating the buttons.

On the other hand, when a force for rotating the third shaft 115 so that the left end part of the third exposed part 111 sinks is applied to the third operation button 11, for example, when the third exposed part 111 is pressed downward on the left side of the third shaft 115, the third shaft 115 rotates within the accommodation holes of the main surface side third shaft accommodation part 276 and the back surface side third shaft accommodation part 283. Thus, in the present embodiment, the third shaft 115 is accommodated in the housing 2' so as to be linearly movable so that the entirety of the third exposed part 111 sinks when the third exposed part 111 is pressed downward, and so as to be rotatable so that the left end part of the third exposed part 111 sinks when the third exposed part 111 is pressed downward. That is, the third operation button 11 can move linearly so that the entirety of the third exposed part 111 sinks when the third exposed part 111 is pressed downward, and can rotate so that the left end part of the third exposed part 111 sinks when the third exposed part 111 is pressed downward, and the third switch 173 is pressed by a linear operation or rotational operation by the user. Thus, the third operation button 11 can be operated in two types of operation modes, and the operability of the third operation button 11 can be further improved.

Furthermore, as described above, the third exposed part 111 extends along the upper left corner 233 of the housing 2 outside the housing 2. As a result, a force in a direction for rotating the third shaft 115 can be more easily generated when the third exposed part 111 is pressed, thereby further improving the operability of the third operation button 11.

Further, the third shaft 115 is arranged between the right end part of the third exposed part 111 and the center of the third exposed part 111 in the left-right direction. Thus, the space required for providing the third operation button 11 can be made smaller than when the third shaft 115 is arranged outside both ends of the third exposed part 111. Furthermore, the distance from the first operation button 4 to the third shaft 115 in the left-right direction can be shortened, making it easier to operate (linear operation) by pressing down the third operation button 11 after operating the first operation button 4.

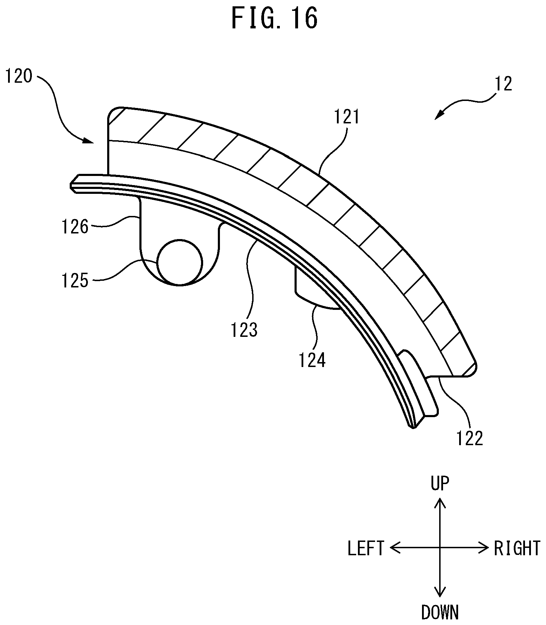

FIG. 16 is a front view of the fourth operation button 12. As shown in FIG. 11, the third operation button 11 and the fourth operation button 12 are arranged at positions which are symmetrical relative to the left-right center line CL of the portable game device 1', and have shapes which are symmetrical relative to the left-right center line CL. That is, the fourth operation button 12 has a fourth keytop part 120, a fourth base part 123, a fourth protrusion 124, a fourth shaft 125, and a fourth shaft base part 126, in the same manner as the third operation button 11. The fourth keytop part 120, the fourth base part 123, the fourth protrusion 124, the fourth shaft 125, and the fourth shaft base part 126 are integrally molded. Furthermore, the fourth keytop part 120, in the same manner as the third keytop part 110, is composed of a fourth exposed part 121 and a fourth non-exposed part 122. In FIG. 16, the fourth exposed part 121 is represented by diagonal lines for convenience in order to distinguish the fourth exposed part 121 from the fourth non-exposed part 122.

The fourth operation button 12 is supported by the housing 2', in the same manner as the third operation button 11, and has the same characteristics as the third operation button 11. For example, as is clear from FIG. 9, the left end part of the fourth exposed part 121 of the fourth operation button 12 is arranged to the right of the right end part of the second exposed part 51 of the second operation button 5 on the upper surface 23'. The fourth exposed part 121 extends along the upper right corner 234 of the housing 2' outside the housing 2'. The fourth shaft 125 is accommodated in the housing 2' so as to be linearly movable so that the entirety of fourth exposed part 121 sinks when the fourth exposed part 121 is pressed downward, and so as to be rotatable so that the right end part of the fourth exposed part 121 sinks when the fourth exposed part 121 is pressed downward. That is, the fourth operation button 12 can move linearly so that the entirety of fourth exposed part 121 sinks when the fourth exposed part 121 is pressed downward, and can rotate so that the right end part of the fourth exposed part 121 sinks when the fourth exposed part 121 is pressed downward, and the fourth switch 174 is pressed by the linear or rotational operation by the user. Due to these characteristics, the fourth operation button 12 has the same effect as the third operation button 11.

Note that the configurations related to the fourth operation button 12 (for example, the configurations of the fourth operation button 12, the main surface side fourth shaft accommodation part 277, the back surface side fourth shaft accommodation part 284, the fourth spring 400, the fourth switch 174, etc.) can be modified in the same manner as the configurations related to the third operation button 11 (for example, the configurations of the third operation button 11, the main surface side third shaft accommodation part 276, the back surface side third shaft accommodation part 283, the third spring 300, the third switch 173, etc.).

Further, in the present embodiment, the first operation button 4 and the third operation button 11 are arranged within a range where the index finger of the left hand of the user extends when the left hand of the user is placed on the left surface 25' of the housing 2. As a result, the first operation button 4 and the third operation button 11 can be operated with the index finger, improving the operability of the portable game device 1'. Additionally, both the first operation button 4 and the third operation button 11 can be operated simultaneously with one finger by operating in such a manner that the third operation button 11 is pressed downward with the pad of the finger while rotating the first operation button 4 with the fingertip. Furthermore, both the first operation button 4 and the third operation button 11 can be operated simultaneously with one finger by operating in such a manner that the first operation button 4 is rotated with the fingertip or pad of the finger, and the third operation button 11 is rotated with the part between the first joint and the third joint of the finger.

The second operation button 5 and the fourth operation button 12 are arranged within a range where the index finger of the right hand of the user extends when the right hand of the user is placed on the right surface 26' of the housing 2. As a result, the second operation button 5 and the fourth operation button 12 can be operated with one finger, improving the operability of the portable game device 1'. Further, both the second operation button 5 and the fourth operation button 12 can be operated simultaneously with one finger by operating in such a manner that the fourth operation button 12 is pressed downward with the pad of the finger while rotating the second operation button 5 with the fingertip. Furthermore, both the second operation button 5 and the fourth operation button 12 can be operated simultaneously with one finger by operating in such a manner that the second operation button 5 is rotated with the fingertip or pad of the finger, and the fourth operation button 12 is rotated with the part between the first joint and the third joint of the finger.

When the index finger is placed at an angle to the upper surface 23', the tip of the index finger is displaced from the center of the upper surface 23' in the front-rear direction more than the base of the index finger. Thus, in the present embodiment, as shown in FIG. 10, the length in the front-rear direction of the first exposed part 41 of the first operation button 4 distant from the left surface 25' is longer than the length in the front-rear direction of the third exposed part 111 of the third operation button 11 close to the left surface 25', and the length in the front-rear direction of the second exposed part 51 of the second operation button 5 distant from the right surface 26' is longer than the length in the front-rear direction of the fourth exposed part 121 of the fourth operation button 12 close to the right surface 26'. That is, the length of the first exposed part 41 is longer than the length of the third exposed part 111 in the front-rear direction, and the length of the second exposed part 51 is longer than the length of the fourth exposed part 121 in the front-rear direction. As a result, a decrease in the operability of the first operation button 4 and the second operation button 5 when the index finger is placed at an angle to the upper surface 23' can be suppressed.

Furthermore, in the present embodiment, as shown in FIG. 10, the position of the front end part of the first exposed part 41 in the front-rear direction is equivalent to the position of the front end part of the third exposed part 111, and the position of the front end part of the second exposed part 51 in the front-rear direction is equivalent to the position of the front end part of the fourth exposed part 121. As a result, both the first operation button 4 and the third operation button 11 can be operated simultaneously with the index finger, whereby both the second operation button 5 and the fourth operation button 12 can be operated simultaneously with the index finger.

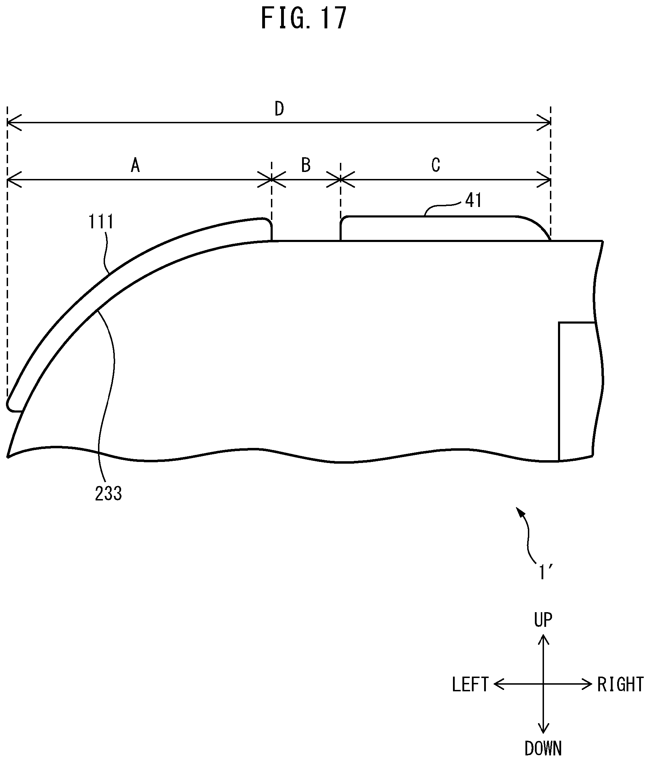

Specific examples of dimensions relating to the arrangements of the first operation button 4, the second operation button 5, the third operation button 11, and the fourth operation button 12 will be described below. Note that the following dimensions are merely examples, and the dimensions relating to the arrangements of the first operation button 4, the second operation button 5, the third operation button 11, and the fourth operation button 12 may be outside the ranges of values given below. FIG. 17 is a partially-enlarged front view of the portable game device 1' showing the portion where the first operation button 4 and the third operation button 11 are arranged.

In the present embodiment, the distance (distance D in FIG. 17) from the right end part of the first exposed part 41 to the left end part of the third exposed part 111 in the left-right direction is set to 30 mm to 40 mm. This dimension enables a typical user to operate the first operation button 4 and the third operation button 11 with the index finger, improving the operation of the portable game device 1'.

Furthermore, the interval (distance B in FIG. 17) between the first exposed part 41 and the third exposed part 111 in the left-right direction is set to 3 mm to 10 mm. This dimension enables the first operation button 4 and the third operation button 11 to be operated continuously, while preventing the user from unintentionally pressing the first operation button 4 and the third operation button 11 simultaneously. This dimension also enables the index finger to be in contact with both the first operation button 4 and the third operation button 11 when the first operation button 4 and the third operation button 11 are not pressed. This allows the user to intuitively understand the positions of the first operation button 4 and the third operation button 11 with the index finger, enabling the first operation button 4 and the third operation button 11 to be operated quickly.

Furthermore, the length (distance C in FIG. 17) of the first exposed part 41 in the left-right direction is set to 10 mm to 15 mm and is made longer than the interval between the first exposed part 41 and the third exposed part 111 in the left-right direction. As a result, the surface area of the first exposed part 41 can be secured within a limited space, whereby the operability of the first operation button 4 is improved.

Furthermore, the length (distance A in FIG. 17) of the third exposed part 111 in the left-right direction is set to 15 mm to 20 mm. By setting the distance of the third exposed part 111 of the third operation button 11 configured to be linearly movable and rotatable to 15 mm to 20 mm, the third operation button 11 can easily be operated in two types of operation modes, linear operation and rotational operation (for example, linear operation by the pad of the finger and rotational operation by the part between the first joint and third joint of the finger).

Furthermore, the length of the third exposed part 111 in the left-right direction is made longer than the interval between the first exposed part 41 and the third exposed part 111 in the left-right direction and the length of the first exposed part 41 in the left-right direction. As a result, the surface area of the third exposed part 111 can be secured within a limited space, thereby improving the operability of the third operation button 11. The surface length of the third exposed part 111 along the shape of the upper left corner 233 of the housing 2 is set to 20 mm to 25 mm.

The second operation button 5 and the fourth operation button 12 are arranged in positions which are symmetrical with the first operation button 4 and the third operation button 11 relative to the left-right center line CL of the portable game device 1'. Thus, the dimensions relating to the arrangements of the second operation button 5 and the fourth operation button 12 are identical to the dimensions relating to the arrangements of the first operation button 4 and the third operation button 11, and the same effects as those described above are achieved.

As an example, the distance from the left end part of the second exposed part 51 to the right end part of the fourth exposed part 121 in the left-right direction is set to 30 mm to 40 mm. The interval between the second exposed part 51 and the fourth exposed part 121 in the left-right direction is set to 3 mm to 10 mm. The length of the second exposed part 51 in the left-right direction is set to 10 mm to 15 mm and is made longer than the interval between the second exposed part 51 and the fourth exposed part 121 in the left-right direction. The length of the fourth exposed part 121 in the left-right direction is set to 15 mm to 20 mm and is made longer than the interval between the second exposed part 51 and the fourth exposed part 121 in the left-right direction and the length of the second exposed part 51 in the left-right direction. The surface length of the fourth exposed part 121 along the shape of the upper right corner 234 of the housing 2 may be set to 20 mm to 25 mm.

Note that in the second embodiment, the third operation button 11 and the fourth operation button 12 may be configured so as to not rotate. That is, the third operation button 11 and the fourth operation button 12 may have one degree of freedom of linear movement only (movement in the upward-downward direction). In this case, the third shaft 115 of the third operation button 11 is omitted, and the third operation button 11 is supported by the housing 2' so that the entirety of third exposed part 111 sinks downward when the third exposed part 111 is pressed downward. For example, the third base part 113 of the third operation button 11 is supported by the housing 2' via the third spring 300. Furthermore, the fourth shaft 125 of the fourth operation button 12 is omitted, and the fourth operation button 12 is supported by the housing 2' so that the entirety of fourth exposed part 121 sinks downward when the fourth exposed part 121 is pressed downward. For example, the fourth base part 123 of the fourth operation button 12 is supported by the housing 2' via a fourth spring 400.

### <Other Embodiments>

Though the preferred embodiments of the present invention have been described above, the present invention is not limited to these embodiments, and various modifications and changes can be made.

For example, in the first embodiment, the upper surface 23 of the housing 2 may have an upper left corner, an upper right corner, and a horizontal part between the upper left corner and the upper right corner in the same manner as the second embodiment. In this case, the first operation button 4 may be arranged in the upper left corner, and the second operation button 5 may be arranged in the upper right corner. Furthermore, in the second embodiment, the entirety of upper surface 23 of the housing 2' may be a flat surface in the same manner as the first embodiment. In this case, the third exposed part 111 of the third operation button 11 and the fourth exposed part 121 of the fourth operation button 12 extend along the flat surface.

Furthermore, the housings 2, 2' may include three or more members (for example, a main surface member, a back surface member, and a connection member) and may be formed by assembling these members. Furthermore, an air intake port or the like for drawing air into the internal space of the housings 2, 2' may be formed on the lower surfaces 24, 24' of the housings 2, 2'. Furthermore, internal components may be attached to the second housings 28, 28', and the first housings 27, 27' may cover the internal components attached to the second housings 28, 28'.

### Reference Signs List

- 1, 1': portable game device
- 2, 2': housing
- 21, 21': main surface
- 22, 22': back surface
- 23, 23': upper surface
- 24, 24': lower surface
- 25, 25': left surface
- 26, 26': right surface
- 3: display
- 4: first operation button
- 41: first exposed part
- 411: first inclined part
- 45: first shaft
- 5: second operation button
- 51: second exposed part
- 511: second inclined part
- 55: second shaft

## Claims

1. A portable game device, comprising:
a display,
a first operation button and a second operation button to be operated by a user, and
a housing having a main surface in which the display is provided, a back surface positioned on an opposite side of the main surface, and a side surface connecting the main surface and the back surface, wherein
the side surface has an upper surface positioned upward when viewed by the user in a state in which the portable game device is held by the user such that the user faces the main surface, a lower surface positioned on an opposite side of the upper surface, a left surface positioned left when viewed by the user in the state, and a right surface positioned on an opposite side of the left surface,
the first operation button is arranged on the upper surface in an area closer to the left surface than the right surface, and the second operation button is arranged on the upper surface in an area closer to the right surface than the left surface,
the first operation button has a first exposed part exposed from the housing, and a first shaft serving as a rotation center of the first operation button,
the first exposed part has, on the right surface side of the first exposed part, a first inclined part inclined from the right surface side toward the left surface side in a direction away from the upper surface,
the first shaft is provided on the lower surface side of the first inclined part, in the same position as a position where the first inclined part is provided relative to the upper surface in a left-right direction between the left surface and the right surface, and is accommodated in the housing so as to be rotatable in a direction in which an end part on the left surface side of the first exposed part sinks when the first exposed part is pressed toward the lower surface side and so as to prevent an entirety of the first exposed part from moving toward the lower surface side,
the second operation button has a second exposed part exposed from the housing, and a second shaft serving as a rotation center of the second operation button,
the second exposed part has, on the left surface side of the second exposed part, a second inclined part inclined from the left surface side toward the right surface side in a direction away from the upper surface, and
the second shaft is provided on the lower surface side of the second inclined part, in the same position as a position where the second inclined part is provided relative to the upper surface in the left-right direction, and is accommodated in the housing so as to be rotatable in a direction in which an end part on the right surface side of the second exposed part sinks when the second exposed part is pressed toward the lower surface side and so as to prevent an entirety of the second exposed part from moving toward the lower surface side.

2. The portable game device according to claim 1, further comprising a third operation button and a fourth operation button to be operated by a user, wherein
the third operation button has a third exposed part exposed from the housing, and the fourth operation button has a fourth exposed part exposed from the housing, and
on the upper surface, an end part on the right surface side of the third exposed part is arranged closer to the left surface than the end part on the left surface side of the first exposed part, and on the upper surface, an end part on the left surface side of the fourth exposed part is arranged closer to the right surface than the end part on the right surface side of the second exposed part.

3. The portable game device according to claim 2, wherein
the third operation button is capable of moving linearly so that an entirety of the third exposed part sinks when the third exposed part is pressed toward the lower surface side, and the fourth operation button is capable of moving linearly so that an entirety of the fourth exposed part sinks when the fourth exposed part is pressed toward the lower surface side.

4. The portable game device according to claim 3, wherein
the third operation button has a third shaft serving as a rotation center of the third operation button, the third shaft is accommodated in the housing so as to be capable of moving linearly so that the entirety of the third exposed part sinks when the third exposed part is pressed toward the lower surface side, and so as to be rotatable so that an end part on the left surface side of the third exposed part sinks when the third exposed part is pressed toward the lower surface side, and
the fourth operation button has a fourth shaft serving as a rotation center of the fourth operation button, the fourth shaft is accommodated in the housing so as to be capable of moving linearly so that the entirety of the fourth exposed part sinks when the fourth exposed part is pressed toward the lower surface side, and so as to be rotatable so that an end part on the right surface side of the fourth exposed part sinks when the fourth exposed part is pressed toward the lower surface side.

5. The portable game device according to claim 4, wherein
the upper surface has an upper left corner connected to the left surface and having a round shape or a chamfered shape, and an upper right corner connected to the right surface and having a round shape or a chamfered shape,
the third exposed part extends along the upper left corner outside the housing, and
the fourth exposed part extends along the upper right corner outside the housing.

6. The portable game device according to any one of claims 2 to 5, wherein
the first exposed part and the third exposed part are arranged in a range where an index finger of a left hand of a user extends when the left hand is placed on the left surface, and
the second exposed part and the fourth exposed part are arranged in a range where an index finger of a right hand of a user extends when the right hand is placed on the right surface.

7. The portable game device according to any one of claims 2 to 5, wherein
a distance from an end part on the right surface side of the first exposed part to an end part on the left surface side of the third exposed part in the left-right direction is 30 mm to 40 mm, and
a distance from an end part on the left surface side of the second exposed part to an end part on the right surface side of the fourth exposed part in the left-right direction is 30 mm to 40 mm.

8. The portable game device according to claim 6 or 7, wherein
in a front-rear direction between the main surface and the back surface, a length of the first exposed part is longer than a length of the third exposed part, and
in the front-rear direction, a length of the second exposed part is longer than a length of the fourth exposed part.

9. The portable game device according to claim 8, wherein
in the front-rear direction, a position of an end part on the main surface side of the first exposed part is equivalent to a position of an end part on the main surface side of the third exposed part, and
in the front-rear direction, a position of an end part on the main surface side of the second exposed part is equivalent to a position of an end part on the main surface side of the fourth exposed part.

10. The portable game device according to any one of claims 7 to 9, wherein
an interval between the first exposed part and the third exposed part in the left-right direction is 3 mm to 10 mm, and
an interval between the second exposed part and the fourth exposed part in the left-right direction is 3 mm to 10 mm.

11. The portable game device according to claim 10, wherein
a length of the first exposed part in the left-right direction is longer than the interval between the first exposed part and the third exposed part in the left-right direction, and a length of the second exposed part in the left-right direction is longer than the interval between the second exposed part and the fourth exposed part in the left-right direction, and
a length of the third exposed part in the left-right direction is longer than the length of the first exposed part in the left-right direction, and a length of the fourth exposed part in the left-right direction is longer than the length of the second exposed part in the left-right direction.
